(19) **Europäisches Patentamt / European Patent Office / Office européen des brevets**

(11) **EP 3 885 162 B1**

(12) **EUROPEAN PATENT SPECIFICATION**

(45) Date of publication and mention
of the grant of the patent:
**24.01.2024 Bulletin 2024/04**

(21) Application number: **19891228.9**

(22) Date of filing: **27.11.2019**

(51) International Patent Classification (IPC):
**B60C 11/00** *(2006.01)*   **B60C 11/03** *(2006.01)*
**B60C 11/12** *(2006.01)*   **B60C 11/13** *(2006.01)*
**B60C 11/04** *(2006.01)*   **B60C 19/00** *(2006.01)*

(52) Cooperative Patent Classification (CPC):
**B60C 11/04; B60C 11/032; B60C 11/0323;**
**B60C 11/1236; B60C 11/1281; B60C 19/002;**
B60C 2011/0353; B60C 2011/0355;
B60C 2011/0374; B60C 2011/1209;
B60C 2011/1227; Y02T 10/86

(86) International application number:
**PCT/JP2019/046448**

(87) International publication number:
**WO 2020/111156 (04.06.2020 Gazette 2020/23)**

(54) **TIRE**

REIFEN

PNEUMATIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **27.11.2018 JP 2018221609**

(43) Date of publication of application:
**29.09.2021 Bulletin 2021/39**

(73) Proprietor: **Bridgestone Corporation**
**Tokyo 104-8340 (JP)**

(72) Inventor: **KAWASHIMA, Keisuke**
**Tokyo**
**1048340 (JP)**

(74) Representative: **Marks & Clerk LLP**
**15 Fetter Lane**
**London EC4A 1BW (GB)**

(56) References cited:
**EP-A1- 2 962 873      EP-A1- 3 127 714**
**JP-A- 2007 269 144    JP-A- 2009 083 818**
**JP-A- 2014 166 827    JP-A- 2014 166 828**
**JP-A- 2014 213 745    JP-A- 2014 213 849**

**Description**

BACKGROUND OF THE INVENTION

Field of the Invention

The present invention relates to a tire with resonators in a land between two main grooves.

Related Background of the Invention

In the tire attached to a vehicle, it is required to reduce noise and improve quiet performance when rolling on the road surface. Moreover, in order to reduce rolling resistance of the tire, a main groove in tread part is made shallow as well. By making the main groove shallow, the noise caused by the main groove is reduced. However, the shallower the main groove is, the bigger the input from the road surface becomes, and sound generated due to the rolling of the tire (a passing noise) is likely to increase. For coping with this, conventionally, there has been known a pneumatic tire provided with resonators reducing air column resonance sound in a land part partitioned between two circumferential grooves (main grooves) (see Patent Document 1).

In the conventional pneumatic tire described in Patent Document 1, a passing noise of the tire caused by the air column resonance sound is reduced by plural resonators in the land part. The air column resonance sound is a noise generated by resonance of air in a tube formed by the main groove and road surface and is reduced by antiresonance of the resonator. However, depending on a forming structure of the resonator, cornering power of the tire may change and steering stability of the tire is thereby likely to be affected.

Prior Art

Patent Literature

Patent Literature 1: Japanese Patent Laid-Open No. 2014-213849.

EP 3 127 714 A1 and EP 2 962 873 A1 both show pneumatic tires comprising a land part, two main circumferential grooves, a resonator with an air chamber opened at the surface of the land part, wherein the air chamber is connected through a first and a second sipes to the circumferential grooves.

SUMMARY OF THE INVENTION

Problems to be Solved by Invention

The present invention has been made in view of problems of conventional tires, and its object is to improve rolling resistance performance and noise performance of the tire without degrading the steering stability of the tire.

Means for solving Problems

The present invention is related to a tire comprises a land part partitioned between two main grooves extending in a circumferential direction of a tire and resonators formed in the land part. A resonator has a cavity part separated from the two main grooves and is opened at the surface of the land part, a 1st sipe that is opened at one main groove and a cavity part, and a 2nd sipe that is opened at the other main groove and the cavity part. Depths of the main groove are 3mm or more and 6. 5mm or less . A volume value of the cavity part is 3 times or more and 5 times or less the sum of cross-sectional areas of the two main grooves with the land part in between. Lengths of the 1st and the 2nd sipes are 10mm or more and 25mm or less.

EFFECTS OF THE INVENTION

According to the present invention, the rolling resistance performance and the noise performance of the tire can be improved without degrading the steering stability of the tire.

BRIEF DESCRIPTION OF THE DRAWINGS

Fig.1 shows a plain view of a tread pattern of a tire of the present embodiment.

Fig.2 shows cross-sectional views of examples of sipes of a resonator.

DESCRIPTION OF THE PREFERRED EMBODIMENTS

The present invention will be described for an embodiment of a tire with reference to the drawings.

The tire of the present embodiment is a pneumatic tire for a vehicle (for example, a passenger car tire), and is formed in a well-known structure by conventional tire constituent members. That is, the tire comprises a pair of bead parts, a pair of sidewall parts located outside the pair of bead parts in a radial direction of the tire, a tread part contacting with the road surface and a pair of shoulder parts located between the tread part and the pair of the sidewall parts. Moreover, the tire comprises a pair of bead cores, a carcass arranged between the pair of bead cores, belts arranged on the outer peripheral of the caucus, and tread rubber having a predetermined tread pattern.

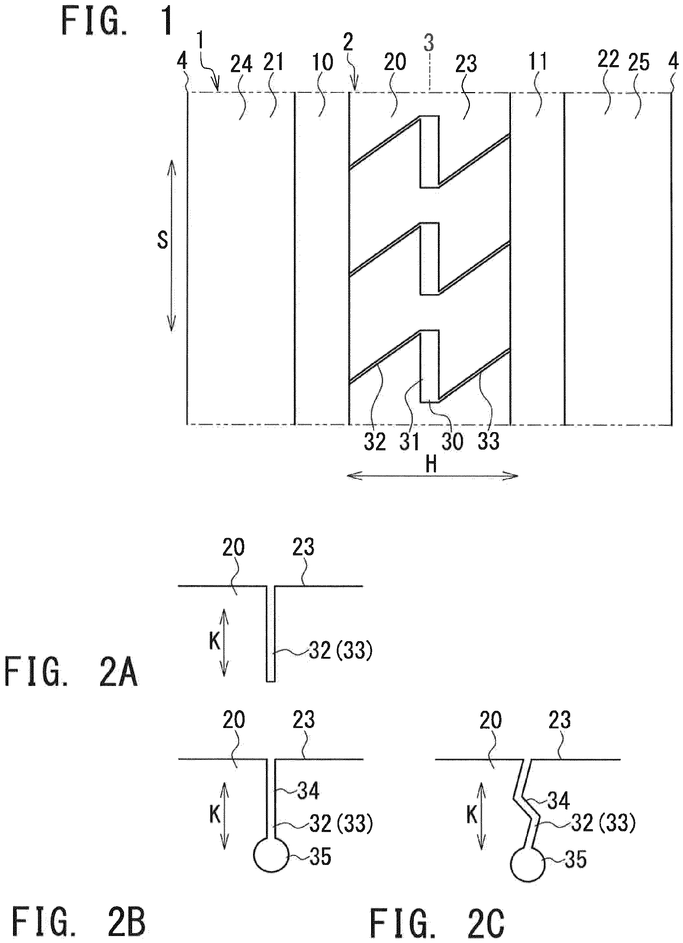

FIG. 1 shows a plan view of a tread pattern of the tire 1 of the present embodiment and a schematic view of a part of the tread part 2 in the circumferential direction S of the tire.

As shown, the tire 1 comprises plural main grooves 10,11, plural lands 20 to 22 and plural resonators 30. Surfaces 23 to 25 of the land parts 20 to 22 are treads located outside the lands 20 to 22 in the radial direction of the tire and the outer peripheral surface of the tread part 2. When a vehicle travels, the surfaces 23 to 25 of lands 120 to 22 come into contact with the road surface and the tire 1 rolls on the road surface.

The Plural main grooves 10, 11 are circumferential grooves extending in the tire circumferential direction S and are paralleled at an interval in the tire width direction H. Here, the tire 1 comprises two main grooves 10, 11 (1st main groove 10, 2nd main groove 11) continuously formed in the tire circumferential direction S. The main grooves 10,11 are formed in an annular shape along the tire circumferential direction S in the tread part 2. Moreover, the main grooves 10,11 are located on both sides of the tire equatorial surface 3 in the tire width direction H and are formed between the tire equatorial surface 3 and the shoulder parts 4, respectively. The tire equatorial surface 3 is located at the central part of the tread part 2 in the tire width direction H, and the shoulder parts 4 are located outside the tread part 2 in the tire width direction H.

Depths of main grooves 10, 11 are depths of the main grooves 10, 11 in the radial direction of the tire and are 3mm or more and 6.5mm or less respectively. Moreover, widths of the main grooves 10, 11 are widths in the direction orthogonal to the extending direction of the main grooves 10, 11 and are 8mm or more and 20mm or less respectively. A distance between the two main grooves 10, 11 in the tire width direction H is 20mm or more and 50mm or less. Here, the extending direction of the main grooves 10, 11 is the tire circumferential direction S. In addition, various dimensions about the tire 1 are values measured in compliance with a standard to be applied to the tire 1.

Standards to be applied to tire 1 are, for example, JATMA YEAR BOOK (Japan Automobile Tire Association Standard) in Japan, YEAR BOOK of TRA (The Tire and Rim Association Inc. ) in the United States and STANDARDS MANUAL of ETRT0 (The European Tyre and Rim Technical Organization) in Europe. Various dimensions about the tire 1 are the values in the tire 1 in a specified state in compliance with the standards to be applied at the place of use or manufacturing site of the tire 1. The specified state means a state, for example where the tire 1 is attached to a specified rim and an internal pressure of tire 1 is set to a specified internal pressure and no load is applied to the tire 1. In JATMA YEAR BOOK, the specified rim is a standard rim among applicable rims, and the specific internal pressure is an air pressure corresponding to the maximum load capacity (the maximum air pressure).

The tread part 2 is partitioned by the main grooves 10, 11 in the tire width direction H, so that plural land parts 20 to 22 are formed in the tread part 2. The plural land parts 20 to 22 are convex parts formed outwardly in the radial direction of the tire and extend along the main grooves 10,11. And the land parts 20 to 22 are rip-like land parts extending in the tire circumferential direction S and are paralleled at intervals in the tire width direction H. Here, the tire 1 comprises three land parts 20 to 22 (1st land part20, 2nd land part 21, 3rd land part 22) partitioned by two main grooves 10, 11. The 1st land part 20 is a central land part partitioned between the two main grooves 10, 11 extending in the tire circumferential direction S and is formed in the central region of the tread part 2 including the tire equatorial surface 3 in the tire width direction H.

A width of the 1st land part 20 in the tire width direction H corresponds to the distance between the two main grooves 10,11 in the tire width direction H and is 20mm or more and 50mm or less. Here, the width of the 1st land part 20 in the tire width direction H is wider than widths of other land parts 21,22 in the tire width direction H, and the 1st land part 20 is the widest land part which is formed widest among the plural land parts 20 to 22. The 2nd land part 21 and the 3rd land part 22 are outer land parts formed outside the main grooves 10, 11 in the tire width direction H and are formed in outer regions of the tread part 2 in the tire width direction H (the regions on the shoulder part 4 side) . The 1st land part 20 is located between the 2nd land part 21 and the 3rd land part 22. The land parts 21 and 22 are located both outside the 1st land part 20 in the tire width direction H and are formed between each main groove 10,11 and each shoulder part 4.

The plural resonators 30 are formed in the 1st land part 20 at intervals in the tire circumferential direction S. The resonator 30 is a noise reduction part that reduces the passing noise of the tire 1 and is connected to the two main grooves 10,11. Air column resonance sound generated in the main grooves 10, 11 is canceled and reduced by anti-resonance of the resonator 30. Here, the resonator 30 is a Helmholtz-type resonator, and the resonance frequency of the resonator 30 is set to reduce the passing noise based on the Helmholtz resonance theoretical formula. When the tire 1 rolls on the road surface, the plural resonators 30 in the 1st land part 20 reduce the passing noise of the tire 1 caused by the air column resonance sound.

The resonator 30 has a cavity part 31 that is opened at the surface 23 of the 1st land part 20 and two sipes 32, 33 (the 1st sipe 32, the 2nd sipe 33) formed between the cavity part 31 and each main groove 10,11. The cavity part 31 is an air chamber of the resonator 30 formed in the 1st land part 20 and is formed at a position separated from the two main grooves 10,11. Here, the cavity part 31 is formed in a cuboid shape, and an opening part of the cavity part 31 on the surface 23 of the 1st land part 20 is formed in a rectangular shape. Moreover, the cavity part 31 is formed at the central part of the 1st land part 20 in the tire width direction H and extends along the tire circumferential direction S. Both ends of the cavity part 31 in the tire circumferential direction S are located in the 1st land part 20, and only the sipes 32, 33 are opened at the cavity part 31.

The sipes 32, 33 are narrow necks of the resonator 30 and extend from the cavity part 31 to the main grooves 10,11. One ends of the sipes 32, 33 are opened at the cavity part 31, and the other ends of the sipes 32,33 are opened at the main grooves 10, 11. The sipes 32, 33 are connected to the cavity part 31 and the main grooves 10,11 and allow the cavity part 31 to communicate with the main grooves 10,11. The 1st sipe 32 is opened at the cavity part 31 and one main groove (1st main groove 10) out of two main grooves 10, 11, the 2nd sipe 33 is opened at the cavity part 31 and the other main groove (2nd main groove 11) out of two main grooves 10, 11. Here, the sipes 32, 33 are formed inclining in the tire width direction H and extend outwardly from the cavity part 31 in the tire width direction H.

One end of the cavity part 31 is located on one side in the tire circumferential direction S, and the other end of the cavity part 31 is located on the other side of the tire circumferential direction S. The 1st sipe 32 is opened at one end of the cavity part 31 and extends from the one end of the cavity part 31 to the 1st main groove 10. The 1st sipe 32 is inclined toward the other side in the tire circumferential direction S with respect to the tire width direction H, when viewed from the one end of the cavity part 31 toward the 1st main groove 10. The 2nd sipe 33 is opened at the other end of the cavity part 31 and extends from the other end of the cavity part 31 to the 2nd main groove 11. The 2nd sipe 33 is inclined toward one side in the tire circumferential direction S with respect to the tire width direction H, when viewed from the other end of the cavity part 31 toward the 2nd main groove 11. The 1st sipe 32 and the 2nd sipe 33 are inclined toward the same side in the tire circumferential direction S with respect to the tire width direction H, when viewed from the 1st main groove 10 toward the 2nd main groove 11. Moreover, the 1st sipe 32 and the 2nd sipe 33 extend in the same extending direction.

A volume value of the cavity part 31 is 3 times or more and 5 times or less a sum of the cross-sectional areas of the two main grooves 10, 11 with the 1st land part 20 in between, and is larger than the sum of the cross-sectional areas of the two main grooves 10,11. The unit of volume of cavity part 31 is cube millimeter ($mm^3$). The cross-sectional areas of the main grooves 10,11 are each an area in the cross section orthogonal to the extending direction of the main grooves 10,11, and the unit of cross-sectional areas of the main grooves 10,11 is square millimeter ($mm^2$). A length of the 1st sipe 32 and a length of the 2nd sipe 33 are 10mm or more and 25mm or less, respectively. The length of the 1st sipe 32 is the length (extending length) along the extending direction of the 1st sipe 32, and the length of the 2nd sipe 33 is the length (extending length) along the extending direction of the 2nd sipe 33.

The cross-sectional area of the 1st sipe 32 and a cross-sectional area of the 2nd sipe 33 are $2mm^2$ or more and $5mm^2$ or less, respectively. The cross-sectional area of the 1st sipe 32 is an area in the cross section orthogonal to the extending direction of the 1st sipe 32, and the cross-sectional area of the 2nd sipe 33 is an area in the cross section orthogonal to the extending direction of the 2nd sipe 33. A width of the 1st sipe 32 and a width of the 2nd sipe 33 on the surface 23 of the 1st land part 20 are widths of an opening part of each sipe 32, 33 on the surface 23 (opening width), respectively and 0.2mm or more and 0.7mm or less.

The width of the 1st sipe 32 is the width in the direction orthogonal to the extending direction of the 1st sipe 32, and the width of the 2nd sipe 33 is the width in the direction orthogonal to the extending direction of the 2nd sipe 33. Here, the 1st sipe 32 and the 2nd sipe 33 are formed to have the same cross-sectional area and the same width. Moreover, on the surface 23 of the 1st land part 20, the sipes 32, 33 are formed to have the same width from one end that is opened at cavity part 31 to the other end that is opened at the main grooves 10,11.

Here, when the depths of the main grooves 10, 11 are less than 3mm, it is likely to effect on drainage performance of the main grooves 10,11. By contrast, the depths of main grooves 10, 11 are more than 6.5mm, rigidity of the 1st land part 20 is decreased, and cornering power of the tire 1 is likely to be affected. Moreover, the volume of the 1st land part 20 increases, and the rolling resistance of the tire 1 is likely to increase. Accordingly, it is preferable that the depths of the two main grooves 10, 11 are 3mm or more and 6.5mm or less. In this case, the drainage performance of the main grooves 10,11 can be ensured. Moreover, rolling resistance performance of tire 1 can be improved, and the cornering power of tire 1 can be increased and steering stability performance of tire 1 is thereby improved. The drainage performance of the main grooves 10, 11 can be more surely ensured, when the depths of the two main grooves 10,11 are 5mm or more and 6,5mm or less.

When the volume value of the cavity part 31 is less than 3 times and more than 5 times the sum of the cross-sectional areas of the two main grooves 10,11, the resonance frequency of the resonator 30 is thereby made higher or lower, which is likely to cause an unevenness in the passing noise that is reducible by the resonator 30. Therefore, it is preferable that the volume value of the cavity part 31 is 3 times or more and 5 times or less the sum of the cross-sectional areas of the two main grooves 10,11. In this case, the air column resonance sound generated in the main grooves 10, 11 and the passing noise of the tire 1 can be surely reduced. Moreover, the rigidity of the 1st land part 20 and the cornering power of the tire 1 can be prevented from being decreased, and the steering stability performance of the tire 1 can be improved.

When the lengths of the 1st sipe 32 and the 2nd sipe 33 are less than 10mm or more than 25mm, the resonance frequency of the resonator 30 is made higher or lower, which is likely to cause unevenness in the passing noise that is reducible by the resonator 30. Therefore, it is preferable that the lengths of the 1st sipe 32 and the 2nd sipe 33 are 10mm or more and 25mm or less. In this case, the air column resonance sound generated in the main grooves 10,11 and the passing noise of the tire 1 can be surely reduced.

Therefore, in the tire 1 described above, the rolling resistance performance and the noise performance of the tire 1 can be improved without degrading the steering stability performance of the tire 1. Moreover, the noise at the time of rolling of the tire 1 on the road surface can be reduced, and quietness performance of the tire 1 can be improved.

When the widths of the main grooves 10,11 are less than 8mm, the drainage performance of the main grooves 10, 11 is likely to be affected. By contrast, when the widths of the main grooves 10, 11 are 20mm or more, ratios of the widths of the main grooves 10, 11 to a grounding width of the tread part 2 increases, and ratios of the widths of the land parts 20 to 22 to the grounding width of the tread part 2 become small. Accordingly, the rigidity of the 1st land part 20 and the rolling resistance performance of the tire 1 are likely to be affected. Therefore, it is preferable that the widths of the two main grooves 10,11 are 8mm or more and 20mm or less. In this case, the drainage performance of the main grooves 10,11 can be ensured. Moreover, the cornering power and the rolling resistance performance of the tire 1 can be improved by preventing the rigidity of the 1st land part 20 from being decreased.

When a distance between the two main grooves 10, 11 in the tire width direction H is less than 20mm, the width of the 1st land part 20 become narrow, so that the rigidity of the 1st land part 20 and the rolling resistance performance of the tire 1 are likely to be affected. By contrast, when the distance between the two main grooves 10,11 in the tire width direction H is more than 50mm, the width of the 1st land part 20 is widened, which would cause to affect the drainage performance of the main grooves 10, 11 for the 1st land part 20. Therefore, it is preferable that the distance between the two main grooves 10,11 in the tire width direction H is 20mm or more and 50mm or less. In this case, the drainage performance of the main grooves 10,11 can be ensured. Moreover, the cornering power and the rolling resistance performance of the tire 1 can be improved by preventing the rigidity of the 1st land part 20 from degrading.

When the cross-sectional areas of the 1st sipe 32 and the 2nd sipe 33 are less than 2mm$^2$, the 1st sipe 32 and the 2nd sipe 33 become easily to be closed during rolling of the tire 1, the function of the resonator 30 and the noise performance of the tire 1 are thereby likely to be affected. By contrast, when the cross-sectional areas of the 1st sipe 32 and the 2nd sipe 33 are more than 5mm$^2$, the cross-sectional areas of the sipes 32, 33 becomes too large, and reduction performance of the passing noise by the resonator 30 is likely to be affected. Accordingly, it is preferable that the cross-sectional areas of the 1st sipe 32 and the 2nd sipe 33 are 2mm$^2$ or more and 5mm$^2$ or less. In this case, the 1st sipe 32 and the 2nd sipe 33 are suppressed from being closed during rolling of the tire 1, and the function of the resonator 30 can be surely performed, and the noise performance of the tire 1 can be improved.

When widths of the 1st sipe 32 and the 2nd sipe 33 on the surface 23 of the 1st land part 20 are less than 0.2mm, the 1st sipe 32 and the 2nd sipe 33 become easily to be closed during rolling of the tire 1, and the function of the resonator 30 and the noise performance of the tire 1 are likely to be affected. By contrast, the widths of the 1st sipe 32 and the 2nd sipe 33 on the surface 23 of the 1st land part 20 are more than 0.7mm, the rigidity of the 1st land part 20 and the rolling resistance performance of the tire 1 are likely to be affected. Accordingly, it is preferable that the widths of the 1st sipe 32 and the 2nd sipe 33 on the surface 23 of the 1st land part 20 are 0.2mm or more and 0.7mm or less.

In this case, the 1st sipe 32 and the 2nd sipe 33 are suppressed from being closed during rolling of the tire 1, and the function of the resonator 30 can be surely performed, and the noise performance of the tire 1 can be improved. Moreover, the cornering power and the rolling resistance performance of the tire 1 can be improved by preventing the rigidity of the 1st land part 20 from being decreased.

FIG. 2 shows cross-sectional views of examples of the sipes 32,33 of the resonator 30 and shapes in the cross section orthogonal to the extending direction of the sipes 32,33.

As shown, the 1st sipe 32 and the 2nd sipe 33 are cut lines formed in the 1st land part 20 and may be formed in various shapes inside the 1st land part 20 and on the surface 23. Moreover, the 1st sipe 32 and the 2nd sipe 33 are opened at the surface 23 of the 1st land part 20 and formed toward the inside of the 1st land part 20 from the surface 23 of the 1st land part 20. In the 1st land part 20, walls of the sipes 32,33 are opposed each other at an interval.

In the 1st sipe 32 and the 2nd sipe 33 shown in FIG. 2A, the sipes 32,33 are formed in a linearly extending linear shape in cross sections orthogonal to respective extending directions and extend along the tire radial direction K. Moreover, the sipes 32,33 are each formed in a slit shape from the opening part located outside in the tire radial direction K to the bottom part located inside in the tire radial direction K.

In the 1st sipe 32 and the 2nd sipe 33 shown in FIGS. 2B and 2C, the sipes 32,33 each have a main body part 34 and an enlarged part 35 respectively. The main body part 34 is a slit part formed in a slit shape and is formed from the surface 23 of the 1st land part 20 to the inside of the 1st land part 20. The inner end of the main body part 34 in the tire radial direction K is the bottom part of the main body part 34 located in the 1st land part 20. The enlarged part 35 is located inner than the main body part 34 in the tire radial direction K and is formed at the bottom part of the each sipes 32,33. The enlarged part 35 is a cavity part formed inside the 1st land part 20 and is formed so as to be enlarged in the width direction of each sipe 32 and 33 with respect to the main body part 34. Moreover, the enlarged part 35 is continuously formed at the inner end of the main body part 34 of in tire radial direction K and wider than the main body part 34. The main body part 34 is opened at the outer part in the tire radial direction K of the enlarged part 35, and the inside of the main body part 34 and the inside of the enlarged part 35 are connected each other.

The main body part 34 shown in FIG. 2B is formed in a linear shape extending linearly in a cross section orthogonal to the extending direction of the sipes 32,33, and extends along the tire radial direction K. The enlarged part 35 shown in FIG. 2B is formed in a circular shape in a cross section orthogonal to the extending direction of the sipes 32, 33. The main body part 34 shown in FIG. 2C is formed in a zigzag shape extending zigzag toward the inside of the tire radial direction K in a cross section orthogonal to the extending direction of the sipes 32,33 and has one or more bending parts. The enlarged part 35 shown in FIG. 2C is formed in a circular shape in the cross section orthogonal to the extending direction of the sipes 32,33.

When the main body parts 34 of the sipes 32, 33 are closed during rolling of the tire 1, walls of the main body part 34 come into contact with each other to support each other. As a result, the rigidity of the 1st landpart 20 is increased, and the rolling resistance of the tire 1 becomes small. Accordingly, the rolling resistance performance of the tire 1 can be improved. Moreover, even when the main body part 34 is closed, the enlarged part 35 is suppressed from being closed. Accordingly, the function of the resonator 30 can be performed to reduce the passing noise of the tire 1. When the main body part 34 is the zigzag shape, the walls of the main body part 34 surely support each other, and the rigidity of the 1st land part 20 is increased.

Note that the main body part 34 may be formed in a shape other than the linear shape and the zigzag shape (for example, a curved shape extending curvedly, a bending shape having a bending part) in a cross section orthogonal to the extending direction of the sipes 32, 33. The enlarged part 35 may be formed in a shape other than the circular shape (for example, an oval shape, a triangular shape, a rectangular shape, a polygonal shape) in a cross section orthogonal to the extending direction of the sipes 32,33. The 1st sipe 32 and the 2nd sipe 33 may be formed to have different lengths each other, or the 1st sipe 32 and the 2nd sipe 33 may be formed to have the same length. The 1st sipe 32 and the 2nd sipe 33 may be formed such that they are opened at one end of the cavity part 31 in the tire peripheral direction S. The 1st sipe 32 and the 2nd sipe 33 may be formed in various shapes (for example, the linear shape, the curved shape, the bending shape, the zigzag shape) in the cross section of the 1st land part 20 cut along the surface 23 and on the surface 23 of the 1st land part 20.

The cavity part 31 of the resonator 30 may be formed in various shapes (for example, a groove shape, a concave shape), and the opening part of the cavity part 31 on the surface 23 of the 1st land part 20 may also be formed in various shapes (for example, the circular shape, the triangular shape, the polygonal shape, the elongated shape) . In plural resonators 30 in the 1st land part 20, the volume of the cavity part 31 may be changed for each resonator 30, or the volume of the cavity part 31 may be the same volume. Even when the cross-sectional areas of the 1st main groove 10 and the 2nd main groove 11 are different from each other, the volume value of the cavity part 31 is 3 times or more and 5 times or less the sum of the cross-sectional areas of the two main grooves 10,11.

The tire 1 has only to include at least two main grooves 10, 11 that partitions the land part therebetween. Accordingly, three or more main grooves may be formed in the tread part 2 of the tire 1, and two or more land parts may be partitioned among the main grooves . For example, when two land parts are partitioned among three main grooves in between the main grooves, the resonator 30 may be formed in both two land parts or the resonator 30 may be formed in one of the two land parts.

(Tire Test)

In order to confirm effects of the tire 1 of the present embodiment, one conventional tire (referred to as conventional product), two comparative example tires (referred to as comparative products 1 and 2) and one embodiment tire corresponding to the tire 1 of the present embodiment (referred to as an implemented product) were produced. The conventional product, the comparative products 1, 2, and the implemented product are radial ply tires for passenger

6

cars of the same tire size (205/ 55R16) and were mounted on same standard rims (6 1/2J) . Comparisons of the rigidity, a rolling resistance coefficient (RRC), the cornering power (CP) and the passing noise (PBN) of the 1st land part 20 were carried out for the conventional product, the comparative products 1, 2, and the implemented product.

The rigidity of the 1st land part 20 is calculated by numerical calculation and is expressed as an index with rigidity of 100 in the conventional product. The larger the number is, the higher the rigidity of the 1st land part 20 becomes. In the cornering power test, the internal pressure of each tire was adjusted to 180 kPa, and the cornering power of each tire was measured by a flat-belt type cornering testing machine.

Test conditions of the cornering power of each tire are the same, and the belt speed is 30 km / h. The cornering power is expressed as an index with the cornering power of 100 in the conventional product. The higher the number is, the greater the cornering power and the higher the steering stability performance becomes.

A rolling resistance test and a passing noise test were conducted in accordance with international standards (ECE R117). The test conditions of each tire are same. The rolling resistance was evaluated by obtaining the rolling resistance coefficient of each tire. The rolling resistance coefficient is expressed as an index with the rolling resistance coefficient of 100 in the conventional product. The higher the number of the index is, the smaller the rolling resistance and the higher the rolling resistance performance become. In the passing noise test, the passing noise level was obtained by measuring the passing noise outside the vehicle. The standard of the passing noise level is that of the conventional product. The lower the passing noise level is, the greater the effect of reducing the passing noise and the higher the noise performance become.

[Table 1]

| | | The conventional product | The comparative product 1 | The comparative product 2 | The implemented product |
|---|---|---|---|---|---|
| Grounding width | mm | 145 | 145 | 145 | 145 |
| Sum of the sect ional areas of the main groove | mm2 | 168 | 168 | 168 | 168 |
| Depth of the main groove | mm | 7.4 | 7.4 | 5. 7 | 5. 7 |
| $\dfrac{\text{Sum of the cross-sectional areas of the main groove}}{\text{Grounding width}}$ | | 1.16 | 1.16 | 1.16 | 1.16 |
| Volume of the cavity part | mm3 | - | 500~800 | - | 500~800 |
| $\dfrac{\text{Volume of the cavity part}}{\text{Sum of the sectional areas of the main groove}}$ | | - | 3~5 | - | 3~5 |
| Length of the sipe | mm | - | 15~21 | - | 15~21 |
| Cross-sectional area of the sipe | mm$^2$ | - | 2 | - | 2 |
| Rigidity of the land part | index | 100 | 95 | 110 | 105 |
| Coefficient of rolling resistance | index | 100 | 100 | 105 | 105 |
| Cornering power | index | 100 | 97 | 105 | 103 |
| Passing noise level | | standard | -0.7dB | +0.5dB | -0.5dB |

As shown in Table 1, in whole of the conventional product, comparative products 1, 2 and implemented product, the grounding width (145mm), the sum of the cross-sectional areas of the two main grooves 10, 11 (168mm$^2$) and the ratio of the sum of the cross-sectional areas of the two main grooves 10,11 to the grounding width (the sum of cross-sectional areas of the main grooves /the grounding width) (1.16) are the same. By contrast, the depths of the main grooves 10,11 of the conventional product and the comparative product 1 are 7.4mm, and depths of the main grooves 10,11 of the comparative product 2 and the implemented product are 5.7mm. Moreover, the conventional product and the comparative product 2 have no resonator 30, the comparative product 1 and the implemented product have resonators 30 formed in the 1st land part 20. In the plural resonators 30 of comparative product 1 and the implemented product, the volume of the cavity part 31 is 500 to 800mm$^3$, a ratio of the volume of the cavity part 31 to the sum of the cross-sectional areas of the two main grooves 10, 11 is 3 to 5.

In other words, the volume value of the cavity part 31 is 3 times or more and 5 times less the sum of the cross-sectional areas of the two main grooves 10,11. The lengths of the 1st sipe 32 and the 2nd sipe 33 are 15 to 21mm, and the cross-sectional areas of the 1st sipe 32 and the 2nd sipe 33 are 2mm$^2$.

As for the rigidity of the 1st land part 20, the rigidity of the comparative product 1 is lower than that of the conventional product, and the rigidity of the comparative product 2 and the implemented product is higher than that of the conventional product. As for the rolling resistance coefficient, the rolling resistance coefficient of the comparative product 1 is the same as the rolling resistance coefficient of the conventional product, and the rolling resistance coefficients of the comparative product 2 and the implemented product are larger than the rolling resistance coefficient of the conventional product. As for the cornering power, the cornering power of the comparative product 1 is smaller than the cornering power of the conventional product, and the cornering power of the comparative product 2 and the implemented product is larger than the cornering power of the conventional product. As for the passing noise level, the passing noise level of the comparative product 1 is -0. 7dB, and the passing noise level of the comparative product 2 is +0.5dB. The passing noise level of the implemented product is -0.5dB. Thus, in the implementation product, the rolling resistance performance and noise performance of the tire was able to be improved without degrading the steering stability performance of the tire.

Reference Signs List

1    tire
2    tread part
3    tire equatorial surface
4    shoulder part
10    1st main groove
11    2nd main groove
20    1st land part
21    2nd land part
22    3rd land part
23    surface
24    surface
25    surface
30    resonator
31    cavity part
32    1st sipe
33    2nd sipe
34    body part
35    enlarged part
H    tire width direction
K    tire radial direction
S    tire circumferential direction

**Claims**

1. A tire (1) comprising a land part (20) partitioned between two main grooves (10, 11) extending in a circumferential direction of a tire and resonators (30) formed in the land part,

   wherein a resonator (30) has a cavity part (31) separated from the two main grooves and is opened at the surface (23-25) of the land part, a 1st sipe (32)
   that is opened at one main groove and the cavity part and a 2nd sipe (33)
   that is opened at the other main groove (10, 11) and the cavity part (31),
   wherein the lengths of the first and the second sipes (32, 33) are 10mm or more and 25mm or less, l
   the tire being **characterised in that**

      depths of the main grooves are 3mm or more and 6.5mm or less,
      a volume value of the cavity part is 3 times or more and 5 times or less a sum of the cross-sectional areas of the two main grooves with the land in between.

2. The tire according to claim 1, wherein widths of the main grooves are 8mm or more and 20mm or less.

3. The tire according to claims 1 or 2, wherein cross-sectional areas of the 1st and 2nd sipes are 2mm$^2$ or more and 5mm$^2$ or less.

4. The tire according to any one of claims 1 to 3, wherein widths of the 1st and 2nd sipes at the surface of the land part are 0. 2mm or more and 0.7mm or less.

5. The tire according to any one of claims 1 to 4, wherein a distance between the two main grooves in the tire width direction is 20mm or more and 50mm or less.

6. The tire according to any one of claims 1 to 5, wherein the 1st sipe and the 2nd sipe each have a main body part formed from the surface of the land part toward inside the land part and an enlarged part continuously formed at an inner end of the main body part in the radial direction of the tire.


**Patentansprüche**

1. Reifen (1), der einen Stegteil (20), der zwischen zwei Hauptrillen (10, 11) geteilt ist, die sich in einer Umfangsrichtung eines Reifens erstrecken, und Resonatoren (30), die in dem Stegteil geformt sind, umfasst,

   wobei ein Resonator (30) einen Hohlraumteil (31), der von den zwei Hauptrillen getrennt ist und an der Oberfläche (23-25) des Stegteils geöffnet ist, eine erste Lamelle (32), die an einer Hauptrille und dem Hohlraumteil geöffnet ist, und eine zweite Lamelle (33), die an der anderen Hauptrille (10, 11) und dem Hohlraumteil (31) geöffnet ist, aufweist,
   wobei die Längen der ersten und der zweiten Lamelle (32, 33) 10 mm oder mehr und 25 mm oder weniger betragen,
   wobei der Reifen **dadurch gekennzeichnet ist, dass**
   Tiefen der Hauptrillen 3 mm oder mehr und 6,5 mm oder weniger betragen,
   ein Volumenwert des Hohlraumteils das Dreifache oder mehr und das Fünffache oder weniger einer Summe der Querschnittsflächen der zwei Hauptrillen mit dem Steg dazwischen beträgt.

2. Reifen nach Anspruch 1, wobei Breiten der Hauptrillen 8 mm oder mehr und 20 mm oder weniger betragen.

3. Reifen nach Anspruch 1 oder 2, wobei Querschnittsflächen der ersten und der zweiten Lamelle 2 mm$^2$ oder mehr und 5 mm$^2$ oder weniger betragen.

4. Reifen nach einem der Ansprüche 1 bis 3, wobei Breiten der ersten und der zweiten Lamelle an der Oberfläche des Stegteils 0,2 mm oder mehr und 0,7 mm oder weniger betragen.

5. Reifen nach einem der Ansprüche 1 bis 4, wobei ein Abstand zwischen den zwei Hauptrillen in der Reifenbreitenrichtung 20 mm oder mehr und 50 mm oder weniger beträgt.

6. Reifen nach einem der Ansprüche 1 bis 5, wobei die erste Lamelle und die zweite Lamelle jeweils einen Hauptkörperteil, der von der Oberfläche des Stegteils hin zur Innenseite des Stegteils geformt ist, und einen vergrößerten Teil, der durchgehend an einem inneren Ende des Hauptkörperteils in der Radialrichtung des Reifens geformt ist, aufweisen.


**Revendications**

1. Pneumatique (1), comprenant une partie d'appui (20) cloisonnée entre deux rainures principales (10, 11) s'étendant dans une direction circonférentielle d'un pneumatique, et des résonateurs (30) formés dans la partie d'appui,

   dans lequel un résonateur (30) comporte une partie de cavité (31) séparée des deux rainures principales et est ouvert au niveau de la surface (23-25) de la partie d'appui, une première lamelle (32) qui est ouverte au niveau d'une rainure principale et de la partie de cavité, et une deuxième lamelle (33) qui est ouverte au niveau de l'autre rainure principale (10, 11) et de la partie de cavité (31),

dans lequel les longueurs des première et deuxième lamelles (32, 33) correspondent à 10 mm ou plus et à 25 mm ou moins,

le pneumatique étant **caractérisé en ce que**

des profondeurs des rainures principales correspondent à 3 mm ou plus et à 6,5 mm ou moins,

une valeur de volume de la partie de cavité représente trois fois ou plus et cinq fois ou moins une somme des aires de section transversale des deux rainures principales, la partie d'appui étant agencée entre elles.

2. Pneumatique selon la revendication 1, dans lequel des largeurs des rainures principales correspondent à 8 mm ou plus et à 20 mm ou moins.

3. Pneumatique selon la revendication 1 ou la revendication 2, dans lequel des aires de section transversale des première et deuxième lamelles correspondent à 2 mm$^2$ ou plus et à 5 mm$^2$ ou moins.

4. Pneumatique selon l'une quelconque des revendications 1 à 3, dans lequel des largeurs des première et deuxième lamelles au niveau de la surface de la partie d'appui correspondent à 0,2 mm ou plus et à 0,7 mm ou moins.

5. Pneumatique selon l'une quelconque des revendications 1 à 4, dans lequel une distance entre les deux rainures principales, dans la direction de la largeur du pneumatique, correspond à 20 mm ou plus et à 50 mm ou moins.

6. Pneumatique selon l'une quelconque des revendications 1 à 5, dans lequel la première lamelle et la deuxième lamelle comportent chacune une partie de corps principal formée de la surface de la partie d'appui vers l'intérieur de la partie d'appui, et une partie élargie formée de manière continue au niveau d'une extrémité interne de la partie de corps principal, dans la direction radiale du pneumatique.

FIG. 1

FIG. 2A

FIG. 2B

FIG. 2C

**EP 3 885 162 B1**

**REFERENCES CITED IN THE DESCRIPTION**

**Patent documents cited in the description**

- JP 2014213849 A
- EP 3127714 A1
- EP 2962873 A1